(19) **Europäisches Patentamt European Patent Office Office européen des brevets**

(11) **EP 4 672 630 A1**

(12) **EUROPEAN PATENT APPLICATION**

(43) Date of publication:
**31.12.2025 Bulletin 2026/01**

(21) Application number: **25173192.3**

(22) Date of filing: **29.04.2025**

(51) International Patent Classification (IPC):
**H04B 7/06** (2006.01) **H04B 7/08** (2006.01)
**H04W 16/28** (2009.01)

(52) Cooperative Patent Classification (CPC):
**H04B 7/06952; H04B 7/088; H04W 16/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.06.2024 US 202418757625**

(71) Applicant: **Intel Corporation Santa Clara, CA 95054 (US)**

(72) Inventors:
• **HAMIDI-SEPEHR, Fatemeh San Jose, 95117 (US)**
• **HEWAVITHANA, Thushara Chandler (US)**
• **MERWADAY, Arvind Beaverton (US)**
• **VANNITHAMBY, Rath Portland, 97229 (US)**

(74) Representative: **Viering, Jentschura & Partner mbB Patent- und Rechtsanwälte Am Brauhaus 8 01099 Dresden (DE)**

(54) **METHODS AND DEVICES FOR COOPERATIVE SENSING**

(57)    An apparatus including a memory and a processor configured to: determine a plurality of coverage areas of a plurality of radio access nodes based on locations and functionalities of the plurality of radio access nodes, identify one or more coverage holes within the plurality of coverage areas based on sensing operation outputs of the plurality of radio access nodes, and determine one or more beams associated with the plurality of radio access nodes based on the plurality of coverage areas and the one or more coverage holes.

A map of the network with radio access nodes' locations and antenna configurations/capabilities

↓

Calculation of FoV for maximum sensing coverage for each radio access node — 1001

↓

Initial scanning to detect coverage gaps — 1002

↓

Analytically draw coverage map (initialization for 1004) — 1003

↓

Calculation of radio access nodes's beam sequences for optimal coverage — 1004

↓

Dynamic sensing beam sequence for each radio access node to jointly cover FoV

**FIG. 10**

EP 4 672 630 A1

## Description

## Technical Field

This disclosure generally relates to methods and devices for disaggregated radio access networks.

## Background

In radio communication networks in accordance with many radio communication technologies, such as Fourth Generation (LTE) and Fifth Generation (5G) New Radio (NR), various methods are employed to provide wireless data transfer with desired efficiency, speed, and reliability. One of these methods involves MIMO (Multiple Input Multiple Output) communication which is a wireless technology that leverages multiple antennas at both transmitter and receiver entities to enhance data transfer efficiency, capacity, and reliability. By using spatial diversity, MIMO systems may allow simultaneous transmission of multiple data streams over the same frequency band, which may result in an increase of data throughput per communication resource. MIMO communication may include techniques like beamforming and spatial multiplexing to take advantage of the diverse propagation paths in the radio environment to improve signal quality, and to mitigate fading effects and interference.

In addition to communication capabilities, modern radio networks are incorporating sensing functionalities to enable a wide range of applications and services. Sensing, in a broad extent, may include the ability to detect, locate, and track objects or certain designated conditions or circumstances in the surrounding environment. Various techniques may be employed for sensing, such as radar, lidar, and imaging sensors. For example, radar systems may utilize electromagnetic waves to detect and track targets by analyzing the reflected signals to provide information about the range, velocity, and angle of detected objects, and may be used for environmental monitoring. Recently, the concept of Joint Communications and Sensing (JCAS) systems has emerged as a promising solution for future radio networks to in accordance with the potential of both communication and sensing capabilities within a unified platform.

## Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIGs. 1 and 2 depict a general network and device architecture for wireless communications and/or sensing operations;

FIG. 2 shows an exemplary internal configuration of a communication device;

FIG. 3A illustrates a simplified digital baseband beamforming architecture;

FIG. 3B shows an exemplary RF beamforming approach;

FIG. 4 shows an illustrative example of a radio communication network;

FIG. 5 shows an example of a device according to various examples in this disclosure;

FIG. 6 shows an example illustrating coverage areas schematically;

FIG. 7 shows an example illustrating coverage holes schematically;

FIG. 8 shows an example illustration of a coverage map in accordance with various aspects described herein;

FIG. 9 shows an example illustration of a coverage map in accordance with various aspects described herein;

FIG. 10 shows an illustrative example of a procedure in accordance with various aspects described herein;

FIG. 11 shows an exemplary radio access network architecture in which the radio access network is disaggregated into multiple units;

FIG. 12 shows an example of a method.

## Description

The following detailed description refers to the accompanying drawings that show, by way of illustration, exemplary details and aspects in which aspects of the present disclosure may be practiced.

Traditional radio communication systems, such as LTE and 5G NR, are designed mainly for wireless data transfer and communication purposes. Such systems may employ various techniques to enhance data throughput, reliability, and spectral efficiency, including MIMO, beamforming, and spatial multiplexing. Through the use of MIMO technologies, multiple antennas at the transmitter and receiver may provide spatial diversity and simultaneous transmission of multiple data streams using the same frequency band. Additionally, beamforming may focus the signal energy towards the intended receiver for the purpose of improving signal quality and mitigating interference. Furthermore, spatial multiplexing may employ the use of diverse propagation paths within the radio environment to transmit multiple data streams concurrently, to increase the overall capacity.

Sensing in the context of JCAS may provide the ability to detect, locate, and track objects or designated conditions or circumstances (i.e. phenomena) in the environment surrounding the sensing entity using techniques like radar, lidar, and imaging sensors. IN this constellation, radar systems may utilize electromagnetic waves to detect and track targets by analyzing reflected signals, to obtain information about the range, velocity, and angle of detected objects. Lidar (Light Detection and Ranging) systems may use laser beams to obtain high-resolution 3D maps of the surroundings. Imaging sensors, such as cameras, may capture visual information about the environment for the purpose of enabling object recognition and classification.

JCAS systems are considered as a technology that intends to integrate communication and sensing capabilities within a single platform or network infrastructure. JCAS systems may leverage the existing communication hardware and resources to enable sensing functionalities to provide new services and applications. In some aspects, through enabled sensing functionalities, the JCAS systems may also optimize resource utilization compared to traditional radio communication systems. Illustratively, JCAS systems may be employed using the same hardware and spectrum resources for both communication and sensing tasks, which may result in improved efficiency and reduced costs compared to deploying separate systems. At the moment, JCAS systems are expected to be one of the main components of future cellular networks (e.g. 6G networks), enabling a wide range of use cases and applications. JCAS systems may differ from traditional communication systems through the incorporation of sensing capabilities in addition to communication functions. Traditional systems are generally focused on data transfer, while JCAS systems can simultaneously perform sensing tasks like target detection, parameter estimation, and environmental mapping using the same hardware and spectrum resources.

Correspondingly, communication devices of the radio network according to a JCAS technology, which the communication devices may include, illustratively, base stations (BSs), user equipments (UEs), and other network infrastructure components of the radio network may transmit and receive communication signals while also performing sensing operations to detect sensing targets or objects. The sensing targets or objects may include certain entities for which the sensing tasks are designated, such as vehicles, obstacles, pedestrians, or phenomena, such as environmental features, weather events, etc.

Radar sensing is one of the key features expected to be implemented in the next generations of wireless systems. Radar sensing may allow the communication device to use communication infrastructure and air interface components to also perceive the environment. Enabling efficient use of the radio spectrum to meet various communication and sensing use case requirements is one of the main goals in such systems. Providing comprehensive sensing coverage across JCAS network is an important aspect of such systems. A JCAS system can be seen as a network of sensors (e.g., BSs) distributed over an intended coverage area. Each BS may cover an area surrounding that BS, of which the range in a given direction may increase or decrease depending on beamforming and how wide transmit (TX) beams are.

In accordance with various aspects described herein, JCAS systems may be configured to optimize the time and resources used for covering a geographic region. For example, sensing nodes of the JCAS systems, such as BSs, can be configured with various TX beams for sensing tasks (i.e. TX beams with which the BSs may perform sensing operations). Generally, using narrow beams may allow a BS to reach to a distance that is farther than performing the same operation using wide beams. Yet, using narrow beams to cover a certain area take longer time compared to performing the same operation using wide beams.

In this context, TX beams may refer to the directional beams formed by the transmitting antennas of transmitters (e.g. at the base stations or sensing nodes). ;TX beams may be used for transmitting signals that serve both communication and sensing purposes as described herein. The characteristics of the TX beams, may particularly include a beamwidth and a direction. In other words, a TX beam may be defined by a beamwidth and a direction.

The term "narrow beam" used herein may refer to a TX beam with a smaller beamwidth compared to another beam that may be referred to as "wide beam". Correspondingly, at its broadest extent, this term should merely indicate a relative beamwidth compared to another beam described in accordance with the aspects herein. A narrow beam may typically be achieved by using large antenna arrays or high-gain antennas. A narrow beam concentrates the transmitted energy into a highly focused direction, resulting in an extended sensing range. Illustratively, TX beam with a 3dB beamwidth of 5 degrees would be considered a highly directional beam (i.e. a narrow beam). At mmWave frequencies (e.g., 28 GHz), a 64-element uniform linear array with 0.5 wavelength spacing may illustratively achieve a 3dB beamwidth of around 7 degrees. Illustratively, in a JCAS system with a field of view (FOV) of 120 degrees in azimuth and elevation, using narrow beams with a 5-degree beamwidth would require around 1200 beams to cover the entire FOV.

The term "wide beam" used herein may refer to a TX beam with a larger bandwidth compared to another beam that may be referred to as "narrow beam". Correspondingly, at its broadest extent, this term should merely indicate a relative beamwidth compared to another beam described in accordance with the aspects herein. A wide beam may typically be achieved by using smaller antenna arrays or lower-gain antennas. Illustratively, a TX beam with a 3dB beamwidth of 30 degrees would be considered a broad beam (i.e. a wide beam). At sub-6 GHz frequencies (e.g., 3.5 GHz), a 4-element uniform linear array with 0.5 wavelength spacing can achieve a 3dB beamwidth of around 35 degrees. Illustratively, in the same JCAS system with a 120-degree FOV described above, using wide beams with a 30-degree beamwidth would require around 36 beams to cover the entire FOV.

In this constellation, with the presence of multiple sensing nodes or BSs (i.e. sensing communication devices) deployed to cover the geographical region by covering respective portions of the geographical region, due to various constrains associated with the geographical region, such as the arrangement of deployment points at which each sensing communication device is deployed, obstacles and/or objects affecting the sensing range of the respective sensing communication devices, supported beam arrangements, and the like, the sensing communication devices may end up with having sensing gaps or having overlap areas in-between.

In accordance with aspects provided herein, an orchestrating entity (e.g. a communication device) of the radio network may orchestrate the sensing communication devices to achieve an ubiquitous and efficient coverage within the designated geographic area. The sensing communication devices providing sensing services within the designated geographic area may compliment and coordinate with each other to perform sensing operations. In particular, aspects described herein may include coordinated adjustments of beamforming parameters used by the sensing communication devices to perform sensing operations.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3 GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 4G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 690-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 600 MHz bands, bands within the 24.25-86 GHz range, etc.), spectrum made available under FCC's "Spectrum Frontier" 4G initiative (including 27.5-28.35 GHz, 29.1-29.25 GHz, 31-31.3 GHz, 37-38.6 GHz, 38.6-40 GHz, 42-42.5 GHz, 47-64 GHz, 64-71 GHz, 61-76 GHz, 81-86 GHz and 92-94 GHz, etc.), the ITS (Intelligent Transport Systems) band of 4.9 GHz (typically 4.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 60.2 GHz-71 GHz band, any band between 65.88 GHz and 61 GHz, bands currently allocated to automotive radar applications such as 66-81 GHz, and future bands including 94-300 GHz and above. Furthermore, the apparatuses and methods described herein can also employ radio communication technologies on a secondary basis on bands such as the TV White Space bands (typically below 690 MHz) where e.g. the 400 MHz and 600 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

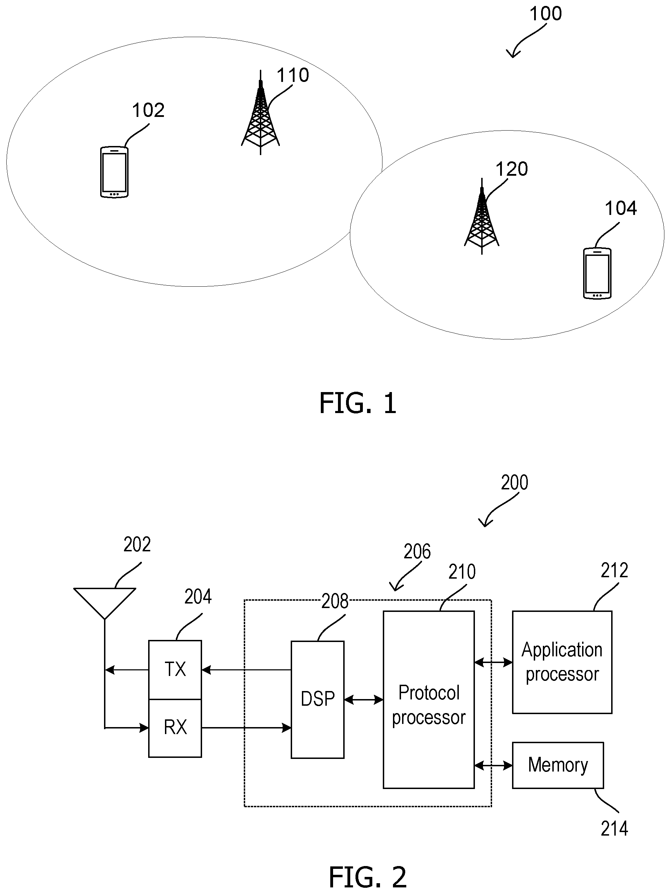

FIGs. 1 and 2 depict a general network and device architecture for wireless communications and/or sensing operations. In particular, FIG. 1 shows exemplary radio communication network 100 according to some aspects, which may include terminal devices 102 and 104 and network access nodes 110 and 120 (e.g. radio access nodes). Radio communication network 100 may communicate with terminal devices 102 and 104 via network access nodes 110 and 120 over a radio access network. Each of terminal devices 102 and 104 or network access nodes 110 and 120 may be a sensing communication device as described herein. Although certain examples described herein may refer to a particular radio access network context (e.g., 6G, 5G NR, LTE, UMTS, GSM, other 3rd Generation Partnership Project (3GPP) networks, WLAN/WiFi, Bluetooth, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). Furthermore, terminal devices 102 and 104 and network access nodes 110 and 120 may perform one or more sensing operations, particularly radar sensing, in accordance with JCAS architecture. In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include 6G, 5G NR, LTE, UMTS, GSM, WiMAX, Bluetooth, WiFi, mmWave, etc., any of which may be applicable to radio communication network 100.

In various aspects, network access nodes 110 and 120 may include one or more CUs, one or more DU, and one or more RUs to communicate with terminal devices 102 and 104. In various examples, an RU may include a device configured to implement various processing functions for RF. In particular the RU may implement functions of a lower PHY. A DU may include a device configured to implement various processing functions, in particular including functions of a higher PHY, MAC, and RLC. The skilled person may realize that this is one example of a split of the network stack and DUs and RUs may have different split configurations. The RU may be linked to terminal devices 102 and 104 over a radio connection, and to the DU over a fronthaul interface. In various examples, the fronthaul interface may be according to a Common Public Radio Interface (CPRI) or an Enhanced Common Public Radio Interface (eCPRI) configured to communicate over a connection via fiber optic cables, but there are also other communication mediums that may handle the fronthaul communication. In any event, the RUs may be serving a plurality of terminal devices, and there may be limitations in terms of link capacity and bandwidth with respect to the communication between the RUs and a corresponding DU over the fronthaul. It may desirable to address some of the fronthaul limitations.

It may be desirable to implement massive MIMO to provide extra system capacity with a plurality of antennas (64, or even 128) at the macro base station side, which usually support 8, 12 or even 16 concurrent Uplink / Downlink streams (i.e., antenna ports) at the same time/frequency resources. Due to the limited bandwidth of fronthaul from the antenna array to the BBU, the physical layer signal must be processed in the Radio Unit (RU) or split with certain processing at RU and some other processing in Distributed Unit (DU), as O-RAN defined.

FIG. 2 shows an exemplary internal configuration of a communication device (e.g. a sensing communication device) according to various aspects provided in this disclosure. The communication device may include various aspects of radio communication devices (e.g. network access nodes 110, 120) or various aspects of mobile radio communication devices (e.g. terminal device 102, 104) as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

In accordance with various aspects provided herein, the communication device 200 may perform sensing operations within the radio communication network 100. Illustratively, the baseband modem 206, (e.g. the digital signal processor 208) may be configured to perform sensing-related signal processing in addition to traditional communication processing. For example, the baseband modem 206 may be configured to implement techniques like radar waveform generation, matched filtering for target detection, parameter estimation (e.g., range, velocity, angle) of detected targets, and environmental mapping. In some examples, the baseband modem 206 (e.g. the digital signal processor 208) may use its hardware accelerators and parallel processing capabilities to efficiently handle the computationally intensive sensing algorithms alongside communication tasks.

Furthermore, the baseband modem 206 (e.g. the protocol controller 210) may be configured to coordinate and/or manage joint operation of communication and sensing functions. Illustratively, the baseband modem 206 may This schedule sensing and communication operations, allocate resources (e.g., time/frequency resources, antenna beams) between the sensing operations and the communication operations, and manage interference between them. The baseband modem (e.g. the protocol controller 210) may further implement sensing control protocols and interfaces to enable coordination with other network entities for distributed sensing operations as described herein.

In some examples, the application processor 212 may be configured to act as a source and sink for sensing data, similar to its role for communication data. The application processor 212 may execute sensing applications that are configured to process and interpret the sensing data received from the baseband modem 206. Illustratively, the application processor 212 may perform at least one of object detection and tracking, environmental mapping, and/or situational awareness services using the sensing data. In some examples, the application processor 212 may interface with external sensors (e.g., cameras, lidars) to fuse data from multiple sensing modalities for enhanced perception capabilities.

Correspondingly, the RF transceiver 204 may further support the transmission and reception of sensing waveforms in addition to communication signals. Illustratively, the RF transceiver 204 may generate and transmit sensing signals (e.g., frequency-modulated continuous waveforms for radar), and may process the received sensing signals to extract target information. In some examples, the RF transceiver 204 can use the same analog and digital components (e.g., amplifiers, filters, modulators/demodulators, ADCs/DACs) for sensing operations and the communication operations, potentially with additional hardware accelerators for sensing-specific tasks. Illustratively, the antenna system 202 may also support both communication and sensing functions, in some examples with separate antenna arrays or shared arrays with beamforming capabilities. In accordance with various aspects, the antenna system 202 can form narrow beams for extended sensing range or wide beams for faster coverage, depending on the sensing requirements and resource constraints. Techniques like MIMO and beamforming can be employed to enhance the sensing performance and enable features like high-resolution target parameter estimation and interference mitigation.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204.

RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

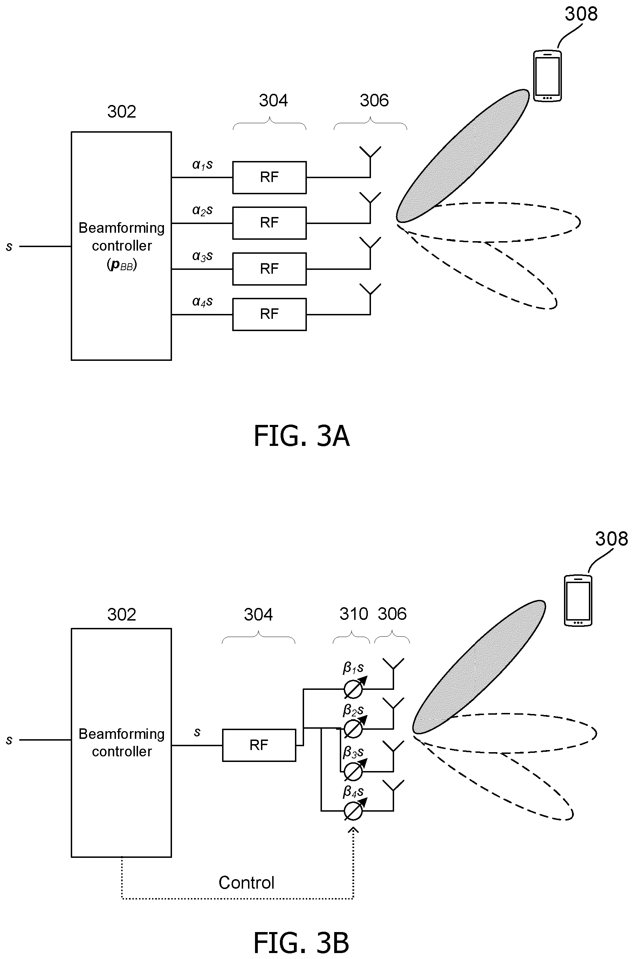

FIG. 3A illustrates a simplified digital baseband beamforming architecture that digitally applies complex beamforming weights (composed of both a gain and phase factor) in the baseband domain. As shown in FIG. 3A, beamforming controller 302 may receive baseband symbol s and subsequently apply a complex weight vector $p_{BB} = [\alpha_1\, \alpha_2\, \alpha_3\, \alpha_4]^T$ to s to generate $p_{BB}s$, where each element $\alpha_i$, $i = 1,2,3,4$ is a complex weight (comprising a gain factor and phase shift). Each resulting element $[\alpha_1 s\, \alpha_2 s\, \alpha_3 s\, \alpha_4 s]^T$ of $p_{BB}s$ may be baseband symbol s multiplied by some complex weight $\alpha_i$. Beamforming controller 302 may then map each element of $p_{BB}s$ to a respective RF chain of RF system 304, which may each perform digital to analog conversion (DAC), radio carrier modulation, and amplification on the received weighted symbols before providing the resulting RF symbols to a respective element of antenna array 306. Antenna array 306 may then wirelessly transmit each RF symbol. This exemplary model can also be extended to a multi-layer case where a baseband symbol vector s containing multiple baseband symbols $s_1$, $s_2$, etc., in which case baseband precoding vector $p_{BB}$ may be expanded to a baseband precoding matrix $p$BB for application to baseband symbol vector s. In this case, $\alpha_i$, $i = 1,2,3,4$ are row vectors, and $p_{BB}s = [\alpha_1 s\, \alpha_2 s\, \alpha_3 s\, \alpha_4 s]^T$. Thus, after multiplying $p_{BB}$ and s, the overall dimension is the same as the overall dimension at the output of beamforming controller 302. The below descriptions thus refer to beamforming controller 302 as $p_{BB}$ and transmit symbol/vector as s for this reason while this model can be extended to further dimensions as explained.

By manipulating the beamforming weights of $p_{BB}$, beamforming controller 302 may be able to utilize each of the four antenna elements of antenna array 306 to produce a steered beam (antenna beamforming pattern) that has greater beam gain than a single antenna element. The radio signals emitted by each element of antenna array 306 may combine to realize a combined waveform that exhibits a pattern of constructive and destructive interference that varies over distances and direction from antenna array 306. Depending on a number of factors (such as antenna array spacing and alignment, radiation patterns, carrier frequency, and the like), the various points of constructive and destructive interference of the combined waveform can create a focused beam lobe that can be "steered" in direction via adjustment of the phase and gain factors $\alpha_i$ of $p_{BB}$. FIG. 3A shows several exemplary steered beams generated by antenna array 306, which beamforming controller 302 may control by adjusting $p_{BB}$. Although only steerable main lobes are depicted in the simplified illustration of FIG. 3A, beamforming controller 302 may be able to comprehensively "form" the overall beam pattern including nulls and sidelobes through similar adjustment of $p_{BB}$.

Beamforming controller 302 may also perform adaptive beamforming, where beamforming controller 302 dynamically changes the beamforming weights in order to adjust the direction and strength of the main lobe in addition to nulls and sidelobes. With these adaptive approaches, beamforming controller 302 can steer the beam in different directions over time, which may be useful to track the location of a moving target point (e.g. a moving receiver or transmitter). In a radio communication context, beamforming controller 302 may identify the location of a target object, like a terminal device 308 (e.g. the direction or angle of terminal device 308 relative to antenna array 306) and subsequently adjust $p_{BB}$ in order to generate a beam pattern with a main lobe pointing towards terminal device 308, thus improving the array gain at terminal device 308 and consequently improving the receiver performance. Through adaptive beamforming, beamforming controller 302 may be able to dynamically adjust or "steer" the beam pattern as terminal device 308 moves in order to continuously provide focused transmissions to terminal device 308 (or conversely focused reception).

In some aspects, beamforming controller 302 may be implemented as a microprocessor. Beamforming controller 302 therefore may be able to exercise a high degree of control over both gain and phase adjustments of $p_{BB}$ with digital processing. However, as shown in FIG. 3A for RF system 304 and antenna array 306, digital beamforming configurations may use a dedicated RF chain for each element of antenna array 306 (where each RF chain performs radio processing on a separate weighted symbol $\alpha_i s$ provided by beamforming controller 302); i.e. $N_{RF} = N$ where $N_{RF}$ is the number of RF chains and $N$ is the number of antenna elements. Because there may be a complex assortment of circuitry in each RF chain (DAC, amplification, mixing, etc.), these digital beamforming approaches can be expensive and power-inefficient. These issues may be worsened as the involved number of antennas increases, which may be particularly problematic for the massive antenna arrays targeted for next-generation technologies that will include tens or even hundreds of antenna elements.

Contrasting with the beamforming controller architecture of FIG. 3A, FIG. 3B shows an RF beamforming approach. As shown in FIG. 3B, beamforming controller 302 may provide baseband symbol s to RF transceiver 304. RF transceiver 304 may perform RF transmit processing on baseband symbol s and provide the resulting symbol s to each of phase shifters 310. In the example shown in FIG. 3B, phase shifters 310 may include four phase shifters 310 that each apply a respective phase shift $\beta_1$ to $\beta_4$ to s. In some aspects, phase shifters 310 may be analog RF phase shifters that apply their respective phase shifts in the analog RF domain. Phase shifters 310 may provide the resulting phase-shifted symbols $\beta_1 s$ to $\beta_4 s$ to antenna array 306. The respective antennas of antenna array 306 may wirelessly transmit the phase-shifted symbols. Similar to the operation of FIG. 3A's digital beamformer, FIG. 3B's RF beamformer may realize a specific antenna beamforming pattern by selecting the phase weights $\beta_1$ to $\beta_4$ (i.e. beamforming weights). Accordingly, beamforming controller 302 may be configured to select phase weights $\beta_1$ to $\beta_4$, such as based on the direction of terminal device 308, and provide the phase weights to $\beta_1$ to $\beta_4$ to phase shifters 310 (with the "Control" line shown in FIG. 3B). Beamforming controller 302 may therefore steer the main antenna beam towards terminal device 308 through proper selection of the phase weights $\beta_1$ to $\beta_4$. In some cases, the phase weights may be phase-only (e.g., only a phase shift with no amplitude change); in other aspects, the phase weights may have a phase and a gain component (e.g., a phase shift and an amplitude gain).

In the context of JCAS systems, beamforming can play a crucial role in enabling efficient sensing operations alongside communication functions. The beamforming controller 302 can be configured to generate beamforming weights ($p_{BB}$ or $\beta$) tailored for sensing purposes, in addition to communication beamforming weights. For sensing operations, the beamforming controller 302 can dynamically adjust the beamforming weights to steer the transmit and receive beams in different directions, enabling comprehensive coverage of the intended sensing area. The beamforming controller 302 can leverage techniques like adaptive beamforming to continuously track and follow targets of interest, such as moving objects or phenomena. By dynamically updating the beamforming weights based on the estimated location and motion of the target, the beamforming controller 302 can steer the main beam lobe towards the target, maximizing the sensing performance and enabling accurate parameter estimation (e.g., range, velocity, angle). Additionally, the beamforming controller 302 can shape the beam pattern by introducing nulls in specific directions to mitigate interference from undesired sources or reflections, further enhancing the sensing accuracy and reliability

As introduced above, communication devices (e.g. sensing communication devices) may use beamforming to increase transmission or reception sensitivity in certain directions and/or perform sensing operations to detect objects or phenomena. To do this, a device may select a set of beamforming weights and apply those beamforming weights to the elements of its antenna array. This may create a unique antenna beamforming pattern that transmits or receives signals with different sensitivity in different directions.

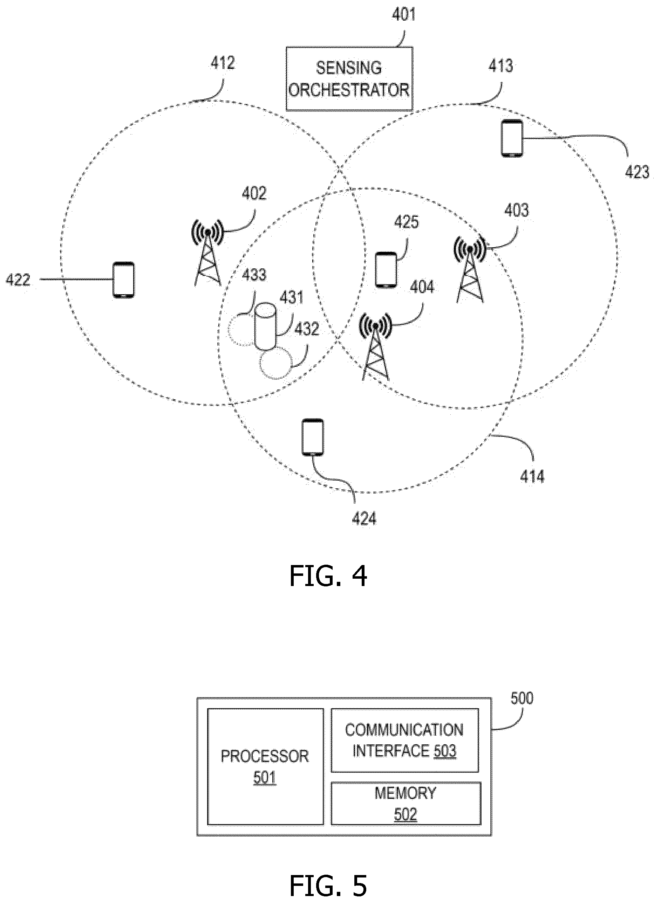

FIG. 4 shows an illustrative example of a radio communication network. The radio communication network may be configured for JCAS. In some examples, the radio communication network may include a sensing orchestrator 401 that is communicatively coupled to a plurality of network access nodes (e.g. BSs), such that each network access node of the plurality network access nodes may be communicatively coupled to the sensing orchestrator 401 over designated interface. Illustratively, the plurality of network access nodes includes a first network access node 402, a second network access node 403, and a third network access node 404 as described herein. Each network access node may be located at different respective locations in order to provide service to different cell sectors, in a manner that each network access node may provide service for UEs for a respective geographic location that may or may not overlap with another cell sector of another network access node. The locations of network access nodes may be defined by absolute coordinates or may be defined relative to each other in a coordinate system.

In this example, the first network access node 402 is configured to provide service for UEs in a first coverage area 412, a second network access node 403 is configured to provide service for UEs in a second coverage area 413, and a third network access node 404 is configured to provide service for UEs in a third coverage area 414, and the coverage areas 412, 413, 414 may overlap at certain locations. In various examples, each network access node may be configured to provide services for substantially the same coverage area to multiple UEs, in which each of the UEs may be served by more than one network access node for joint processing.

Accordingly, each network access node may be serving a plurality of UEs within the respective sector of the respective network access node to receive and transmit radio communication signals from/to UEs. In this illustrative example, the first network access node 402 is configured to provide services for a first group of UEs including UE 422. In this context, as second group of UEs including the UE 423 is associated with the second network access node 403, in which the second network access node provide services to the second group of UEs. Similarly, a third group of UEs including the UE 424 is associated with the third network access node 404, in which the third network access node provide services to the third group of UEs. The services provided by the network access nodes may include communication services and also sensing services in accordance with JCAS architecture. Furthermore, there may be cases in which there are overlap at certain locations. For this aspect, one of the UEs, i.e. the UE 425 is depicted in such a manner, the UE 425 may be located to receive services in the second coverage area 413 and in the third coverage area 414.

In accordance with aspects described herein, a coverage area (e.g. the coverage areas 412, 413, 414) may refer to the geographical region or area within which a network access node (e.g., network access nodes 402, 403, 404 respectively) can provide communication and sensing services to user equipment (UEs) or other devices, illustratively in a reliable manner. A coverage area of a network access node may be determined by various factors, including the location of the network access node, transmit power of the network access node, antenna configuration of the network access node, and propagation characteristics of the surrounding environment. In more detail, the network topology and cells/sectors planning, desired sensing field of views (FoVs), network access nodes' antenna panels and their sizes and orientations, beamforming capabilities, transmit powers, as well as the placement, shapes, and material of objects in the environment, etc. Although in this illustrative example, the coverage areas are visualized as a circular shape, in regular conditions they may correspond to an irregular shape centered around the network access node due to propagation characteristics of the environment surrounding the network access node.

For example, a coverage area of a network access node may include one or more coverage holes within the coverage area. A coverage hole associated with a network access node may refer to a geographical region or area within the coverage area of that network access node where the signal strength or quality from that network access node is insufficient or inadequate to provide reliable communication and sensing services. For example, a coverage hole may represent a spatial region that is occluded from a sensing operation of a radio network access node. Illustratively, a coverage hole may arise from various factors, such as obstructions, interference, or insufficient signal strength. As illustrated herein, an obstacle 431 may be located within the geographic region, which may form a coverage hole. A coverage area of a network access node may represent a field of view coverable by the network access node.

Illustratively, the obstacle 431 may form a first coverage hole 432 within the first coverage area 412 of the first network access node 402, as illustratively the obstacle may be blocking radio signals transmitted by the first network access node 402 to reach to that particular location illustrated with the first coverage hole 432 to provide communication and/or sensing services reliably. Similarly, the obstacle 431 may also form a second coverage hole 433 within the third coverage area 414 of the third access node 404, as illustratively the obstacle may be blocking radio signals transmitted by the third network access node 404 to reach to that particular location illustrated with the second coverage hole 433.

In this constellation, it can also be seen that although the first network access node 402 may not provide services within the first coverage hole 432, communication and/or sensing services by the network can still be provided within the first coverage hole 432 by the third network access node 404 providing desired services within the first coverage hole 432. Similarly, the third network access node 404 may not provide services within the second coverage hole 433, but communication and/or sensing services by the network can still be provided within the second coverage hole 433 by the first network access node 402 providing desired services within the second coverage hole 433.

In accordance with various aspects described herein, noting the presence of coverage holes as illustrated herein, respective geographic region covered collectively by the first coverage area 412 and the third coverage area 414 may be arranged such that the first network access node 402 may arrange one or more TX beams at the direction towards the obstacle using wide beams compared to other directions at which the first network access node 402 generates TX beams at maximum or closer to maximum TX power using narrow beams. Similarly, the third network access node 404 may arrange one or more TX beams at the direction towards the obstacle using wide beams compared to other directions at which the third network access node 404 generates TX beams at maximum or closer to maximum TX power using narrow beams.

In various aspects, the sensing orchestrator 401 may determine one or more beams associated with the network access nodes as described herein. In accordance with various aspects the term "one or more beams associated with the network access nodes" includes "one or more beams to be used by the network access nodes". Although the sensing orchestrator 401 has been illustrated in FIG. 4 as a separate entity, this should not be taken as limiting. In some examples, one of the network access nodes 402, 403, 404 may implement the sensing orchestrator 401. In some examples, a further network access node communicatively coupled to at least one of the network access nodes 402, 403, 404 may implement the sensing orchestrator 401. In a disaggregated network architecture in which radio units and baseband units of network access nodes may be separated, such as an open radio access network (O-RAN) architecture, a baseband unit, such as an O-DU or an O-CU may implement the sensing orchestrator 401. In some examples, an entity of a network architecture that resides higher than radio units (e.g. a remote intelligent controller (RIC), or a service management and orchestration framework (SMO) implementing entity may implement the sensing orchestrator 401.

FIG. 5 shows an example of a device according to various examples in this disclosure. The device 500 may be a sensing communication device as described in accordance with various aspects provided herein. Illustratively, the device 500 may be the sensing orchestrator 401 as described in accordance with the aspects provided in FIG. 4 of a radio access network. In cellular communication context, the device 500 may include aspects of an intermediary node of a disaggregated radio communication architecture (e.g. Open-Radio Access Network (O-RAN)). In some aspects, device 500 may include a distributed unit (e.g. O-DU), a central unit (e.g. O-CU) or a RAN intelligent controller (e.g. a near-RT-RIC, a non-RT-RIC).

The device 500 may include a processor 501, a memory 502, and a communication interface 503 configured to receive and transmit communication signals in order to communicate with further entities within the radio access network. In some aspects, the communication interface 503 may include one or more signal paths to carry communication signals. The communication interface 503 may include one or more transceivers.

The processor 501 may include one or more processors, which may include a baseband processor and an application processor (e.g. application processor 212, baseband modem 206). In various examples, the processor 501 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 501 may be implemented in one processing unit, e.g. a system on chip (SOC), or a processor. In accordance with various examples, the processor 501 may further provide further functions to process received communication signals. The memory 502 may store various types of information required for the processor 501, or the communication interface 503 to operate in accordance with various aspects of this disclosure.

In some examples, the communication interface 503 may be configured to communicate with a plurality of radio access nodes (e.g. the network access nodes 402, 403, 404), each configured to provide communication and/or sensing services in their respective coverage areas (412, 413, 414). For example, the device 500 may receive information from each of the radio access nodes via the communication interface 503, some of which are described herein. For example, the device 500 may provide instructions to each of the radio access nodes via the communication interface to configure each radio access node respectively as described herein.

The processor 501 may determine a plurality of coverage areas of a plurality of radio access nodes based on locations and functionalities (e.g. capabilities) of the plurality of radio access nodes. Illustratively, the processor 501 may receive information representing the locations and functionalities of the plurality of radio access nodes from each radio access node respectively. In some examples, the memory 502 may store the information. The location information may include geographic coordinates of the radio access nodes. Illustratively, the information representing functionalities of each radio access node may include particularly beamforming capabilities, such as one or a combination of supported transmit power, antenna gain (TX antenna gain, RX antenna gain, supported beamforming directions, supported beamforming beamwidths, orientation of antenna panels, etc. of the radio access node.

Illustratively, the plurality of coverage areas determined based on the locations and the functionalities may be indicative of, for each radio access node, a maximum coverage area obtainable by the radio access node, illustratively without taking environmental conditions affecting communication and/or sensing operations using radio signals. The processor 501 may determine a respective coverage area for each radio access node based on the location and functionalities of that radio access node. The processor 501 may determine the respective coverage area using a narrow beam of the radio access node. In various aspects, the processor 501 may determine a respective coverage area for each radio access node based on the TX beam of that radio access node, which the TX beam may have the maximum range.

For example, the processor 501 may determine the respective coverage area by using a beam configuration with the narrowest beam supported by the radio access node, to which the capability information may indicate. Illustratively, the narrowest beam may correspond to the highest penetration at the air interface resulting in maximum power at a particular direction. In some examples, the configuration of the TX beam used for this determination may be referred to as a first beam. Correspondingly, the plurality of coverage areas determined based on the locations and the functionalities may refer to the plurality of coverage areas determined based on selected first beams for the plurality of radio access nodes, such that a corresponding first beam has been selected for each radio access node according to the capability of the radio access node, wherein the respective first beam is a narrow beam of the respective radio access node (e.g. compared to at least one other beam of the respective radio access node). In some examples, all the first beams may have the same beam configuration in terms of TX power and/or the beamwidth, for example where all the first beams is a common beam with a designated TX power and beamwidth, that is supported by the plurality of radio access nodes.

In some examples, the processor 501 may determine the plurality of coverage areas referred to herein based on information provided by the plurality of radio access nodes, which the information for each radio access node represents a coverage area for the radio access node that is obtained with a corresponding narrow beam of the radio access node. In some examples, the processor 501 may calculate the plurality of coverage areas for the plurality of radio access nodes based on respective functionalities (e.g. capabilities) of the plurality of radio access nodes and respective locations of the plurality of radio access nodes.

For example, the processor 501 may calculate, for a radio access node of the radio access nodes based on a location of the radio access node and a narrow beam of the radio access node. The calculation may be based particularly a TX power designated for the narrow beam and a beamwidth of the narrow beam. Illustratively, the processor 501 may obtain a map of the radio network with locations of the radio access nodes and antenna configurations. Correspondingly, based on the map and further parameters for the radio access node, which may include beamforming capabilities, geo location, and orientation of antenna panels, the processor 501 may perform the calculation for the corresponding coverage area of that radio access node. This calculated coverage area may indicate an ideal field of view (e.g. no obstacles or barriers affecting the calculation) with the maximum beamforming gain for the radio access node. The processor 501 may perform this calculation for each radio access node to obtain the coverage areas for all radio access nodes.

In accordance with various aspects provided herein, the processor 501 may determine the plurality of coverage areas based on calculations performed for each radio access node according to a predefined mathematical equation, such as a radar equation. The radar equation, in accordance with various aspects described herein, may be given by:

$$P_R = \frac{P_T G_T(\theta) G_R(\theta) c^2 \sigma_{RCS}}{(4\pi)^3 f_c^2 d^{2n}} \tag{1}$$

in which:

$P_T$ = transmit power;
$G_T(\theta)$ = transmit antenna gain including BF gain in the direction of interest;
$G_R(\theta)$ = received antenna gain in the direction of interest;
$c$ = speed of light;
$\sigma_{RCS}$ = radar cross section of the target;
$n$ = propagation loss exponent.

In the equation (1), the processor may obtain $G_T$ as:

$$G_T = G_{TA} G_{BF} \tag{2}$$

For example, assuming periodogram calculation with 2-D FFT of size $N\_FFT_R \times N\_FFT_D$, where $N\_FFT_R$ and $N\_FFT_D$ are range and doppler FFT sizes respectively, the overall processing gain from received signal to target detection point may be calculated with:

$$G = N\_FFT_R \times N\_FFT_D \times G_{RX\_COMB} \tag{3}$$

Where $G_{RX\_COMB}$ = combining gain of periodogram over RX antennas (non-coherent combine).
Hence SNR at Constant False Alarm Rate (CFAR) detection point is,

$$SNR_{det} = SNR_R \times N\_FFT_R \times N\_FFT_D \times G_{RX\_COMB}$$

$$SNR_{det} = \frac{P_T G_T(\theta) G_R(\theta) C^2 \sigma_{RCS}}{(4\pi)^3 f_c^2 d^{2n}} \times N\_FFT_R \times N\_FFT_D \times G_{RX\_COMB} \qquad (4)$$

Generally, the processor 501 may operate with designated constraints to consider that a certain $SNR_{det}$ level (e.g., 17 dB) for the minimum target detectable radar cross section (RCS) is to be achieved. Based on this, the range for a given direction in FoV for the target RCS can be calculated as follows,

$$d(\theta) = \sqrt[2n]{\frac{P_T G_T(\theta) G_R(\theta) C^2 \sigma_{RCS}}{SNR_{det}(4\pi)^3 f_c^2 N_0 K \Delta f} \times N\_FFT_R \times N\_FFT_D \times G_{RX\_COMB}} \qquad (5)$$

Correspondingly, the processor 501 may construct the FoV for a radio access node by calculating $d(\theta)$ over the range of angles of coverage for a given TX beam. Accordingly, the processor 501 may, based on the beamwidth designated for the designated narrow beam of the radio access node, construct the FoV for all beam directions. The constructed FoV for a radio access node may correspond to the coverage area of that radio access node. The processor 501 may perform above-mentioned calculations for each radio access node to obtain the coverage areas of the plurality of radio access nodes. It is also to be noted that additional factors such as losses due to noise figure in RX receiver, cable losses, etc., need to be included in the SNR calculation in real system.

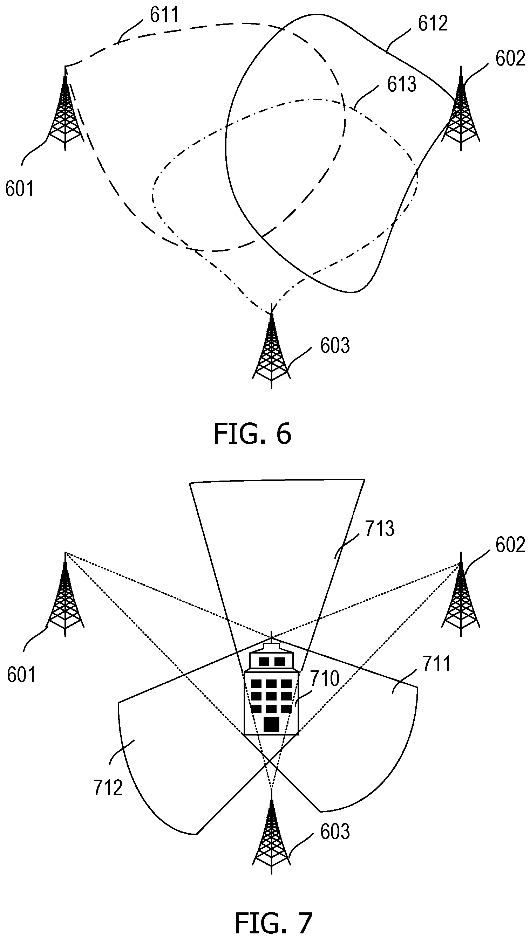

FIG. 6 shows an example illustrating coverage areas schematically. Illustratively, a first coverage area 611 represents the coverage area calculated for a first radio access node 601. A second coverage area 612 represents the coverage area calculated for a second radio access node 602. A third coverage area 613 represents the coverage area calculated for a third radio access node 603. Illustratively, through a model-based calculation, each coverage area represents a coverage projected within a geographical region for maximum coverage of the respective radio access node.

Furthermore, the processor 501 may identify one or more coverage holes within the plurality of coverage areas based on sensing operation outputs of the plurality of radio access nodes. For this purpose, the apparatus 500 may receive information representing the sensing operation outputs, which may be referred to as sensing operation output information in this disclosure, of the plurality of radio access nodes. In some examples, the radio access nodes may perform configured sensing operations to detect objects and/or phenomena within their respective coverage areas. In some examples, the processor 501 may send information instructing each of the plurality of radio access nodes to perform sensing operations using their respective narrow beams. Illustratively, a narrow beam which a respective radio access node perform its respective sensing operation is the same narrow beam based on which the processor 501 calculates the respective coverage area for the radio access node.

As described herein, the sensing operation output information may represent one or more coverage holes for the plurality of radio access nodes. In more detail, sensing operation output information of a radio access node may represent one or more coverage holes within the coverage area of that radio access node. Correspondingly, as indicated in accordance with FIG. 4, sensing operation output information of multiple radio access nodes may indicate different coverage holes for the same obstacle, each coverage hole being from a perspective of the one of the radio access nodes.

In some examples, the processor 501 may instruct each of the radio access nodes to perform an initial scanning to obtain the sensing operation output information respectively. The aim of the initial scanning is to detect any large-scale objects (e.g., buildings, mountains, etc.) that may create coverage holes (i.e. blind spots) in the FoV of each radio access node. The radio access nodes may scan their respective FoVs with respective narrow beams (i.e., high beamforming gain) aimed at reaching furthest possible coverage (i.e. if no obstacles exist in the direction). In some examples, the processor 501 may instruct the radio access nodes to perform the initial scanning once. Correspondingly, as this may be a one-time procedure, the amount of time required for its completion of respective scanning operations may not be a concern. In some examples, each sensing operation output information of a radio access node may represent a static map/topology around the radio access node with respective blockers/occlusions and resulting coverage holes detected by the respective radio access node in an identifiable manner (e.g. marked).

FIG. 7 shows an example illustrating coverage holes schematically. Illustratively, obtained sensing operation output information of radio access nodes may represent a first coverage hole 711 representing the coverage hole detected for the first radio access node 601. A second coverage hole 712 represents the coverage hole detected for the second radio access node 602. A third coverage hole 713 represents the coverage hole detected for the third radio access node 603. An obstacle 710 may also be identified in accordance with the initial sensing operation. Illustratively, through initial scanning operations with maximum coverage beams performed by the radio access nodes, macro features in respective FoVs may be detected leading to coverage holes (e.g. blind spots). The obtained sensing operation output information may correspondingly result in a static map around each radio access nodes with its respective blockers and resulting coverage holes marked in the coverage.

In accordance with various aspects described herein, the processor 501 may determine one or more beams associated with the plurality of radio access nodes based on the plurality of coverage areas and the one or more coverage holes. As described herein, noting desired increase efficiency of sensing operations, in view of the determination of plurality of coverage areas according to respective narrow beams (i.e. first beams) of the radio access nodes, the processor 501 may determine at least one beam for at least one radio access node, wherein the determined at least one beam is wider from the respective narrow beam of the at least one radio access node. As described herein, such beams that are wider from respective beams based on which the plurality of coverage areas are determined and/or based on which the one or more coverage holes are identified, are to be referred to as wide beams.

Through beam determinations as described herein, the processor 501 may determine the one or more beams, such that the widest beams, which the respective radio access nodes support according to the respective capability information, are used by the respective radio access nodes to reach the edge of the coverage area in each direction. Correspondingly, the processor 501 may determine respective one or more beams for each radio access node to achieve coverage with the minimum number of beams. Accordingly, the through operations of the processor 501, an efficient coordination between radio access nodes may be obtained to cover the designated geographic region dynamically and cooperatively.

It is to be noted that, with the presence of the plurality of coverage areas, illustratively geographic areas which are coverable by respective radio access nodes may be identified by the processor 501. As the processor 501 may also have identified the coverage holes within the coverage areas, the processor 501 may determine the one or more beams, such that the radio access nodes cover respective regions efficiently and effectively, illustratively through determination and configuration of wider beams, in particular for beam directions directed from respective radio access node to one or more coverage holes identified within the coverage area of the respective radio access node.

In accordance with various aspects provided herein, noting that a number N TX beams, each having a different beam direction of a set of beam directions, have been used to determine the respective coverage area of a radio access node and/or to identify respective one or more coverage holes of the radio access node, the processor 501 may determine one or more respective beams for that radio access node, such that a number smaller than N TX beams is used to cover the region covered by the set of beam directions.

Correspondingly, the processor 501 may determine, for a respective coverage hole identified within the coverage hole of one of the radio access nodes, a beam to be used by at least one other radio access node of the plurality of access nodes to provide a coverage for the respective coverage hole. Illustratively, at one or more directions towards the respective coverage hole for the one of the radio access nodes, the processor 501 may determine a blocked beam (e.g. a first beam in this embodiment of the one or more beams) for the one of the radio access nodes, while the processor 501 may determine a covering beam (a second beam in this embodiment of the one or more beams) for the at least one other radio access node at one or more other directions towards the respective coverage hole for the at least one other radio access node. Illustratively, the blocked beam is a wide beam of the one of the radio access nodes, such that the wide beam does not reach at least a portion of the respective coverage hole when transmitted at that direction, despite that portion is within the coverage area determined for the one of the radio access nodes. The covering beam may still be the narrow beam of the at least one other radio access node used in determination of respective coverage area of the at least one other radio access node and/or identification of the respective coverage hole. In various aspects provided herein, the processor 501 may determine the covering beam based on the capability information of the at least one other radio access node, illustratively by selecting a beam from supported beams. The processor 501 may determine the beams as described herein for each coverage hole of the one or more coverage holes.

In other words, the processor 501 may determine the blocked beam to reduce the range of sensing operations of the one of the radio access nodes at the one or more directions towards the respective coverage hole for the one of the radio access nodes, while the processor 501 may determine the covering beam, for the at least one other radio access node to ensure that the respective coverage hole is covered by the at least one other radio access node. Provided that the respective coverage hole is covered by the at least one other radio access node, the processor 501 may determine the covering beam as a wider beam of the at least one other radio access node, that is wider than the narrow beam of the at least one other radio access node used in determination of respective coverage area of the at least one other radio access node and/or identification of the respective coverage hole.

In an example, in which the respective coverage hole is identified as it is located within respective coverage areas of at least two other radio access nodes, the processor 501 may determine respective covering beams of the at least two other radio access nodes to provide a joint coverage for the respective coverage hole. Illustratively, the respective covering beam of one of the at least two other radio access nodes may be configured such that the respective covering beam covers only a portion of the respective coverage hole, while the other respective beam of another one of the at least two other radio access nodes may be configured such that the respective other covering beam covers only a different portion of the respective coverage hole that is different than the portion covered by the one of the at least two other radio access nodes.

From the perspective of the one of the radio access nodes, for which the blocked beam is determined, the processor 501 may determine further one or more beams at one or more different directions that are different from the one or more directions towards the respective coverage hole for the one of the radio access nodes, wherein the further one or more beams may include beams that are narrower from the blocked beam. Illustratively, the further one or more beams may be the narrow beam of the one of the radio access nodes used in determination of the respective coverage area of the one of the radio access nodes and/or identification of the respective coverage hole. In some examples, the further one or more beams may include beams that are narrower from the block beam but wider from the narrow beam of the one of the radio access nodes used in determination of the respective coverage area of the one of the radio access nodes and/or identification of the respective coverage hole.

In accordance with various aspects provided herein, the processor 501 may determine the one or more beams for each coverage hole identified within the geographic area (i.e. for each coverage hole identified based on the sensing operation output information). The determined one or more beams for each coverage hole may include one or more blocked beams for the respective coverage hole and one or more covering beams for the respective coverage hole.

In various aspects, the processor 501 may further determine the one or more beams for each coverage hole based on further parameters. Illustratively, the processor 501 may determine the one or more beams for each coverage hole further based on at least one or a combination of a topology of the network including the plurality of radio access nodes, a geometry associated with the locations of the plurality of radio access nodes, a mapping of cells or sectors provided by the plurality of radio access nodes, orientations of antenna arrays of the plurality of radio access nodes, beamforming configurations supported by the plurality of radio access nodes, respective smallest radar cross sections detectable by the plurality of radio access nodes, one or more load balancing parameters, etc.

In accordance with various aspects described herein, the processor 501 may generate a coverage map based on the plurality of coverage areas and the one or more coverage holes identified within the plurality of coverage areas. The coverage map may illustratively represent a further coverage area for each radio access node of the plurality of radio access nodes, that is different from the respective coverage area previously determined for the respective radio access node.

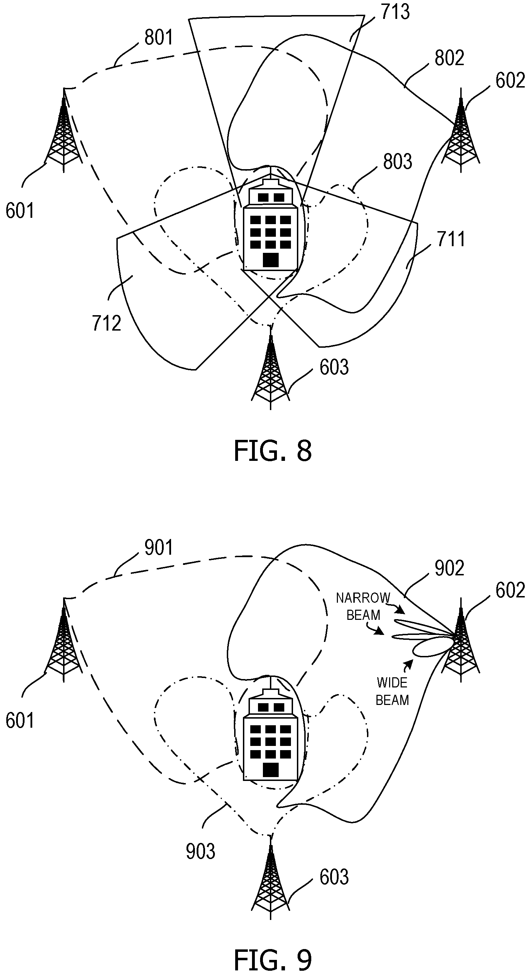

FIG. 8 shows an example illustration of a coverage map in accordance with various aspects described herein. Illustratively, the coverage map may represent a first further coverage area 801 representing the geographic region expected to be covered by the first radio access node 601 for sensing operations. A second further coverage area 802 represents the geographic region expected to be covered by the second radio access node 602 for sensing operations. A third further coverage 803 area represents the geographic region expected to be covered by the third radio access node 603 for sensing operations. Coverage holes may also be identified within the coverage map, illustratively, the first coverage hole 711, the second coverage hole 712, and the third coverage area 713. An obstacle 710 may also be identified in accordance with the initial sensing operation.

For example, the coverage may include information, for each coverage hole identified from a perspective of a respective radio access node of the plurality of radio access nodes, representative of other respective one or more radio access nodes of the plurality of radio access nodes covering the respective coverage hole. Illustratively, the other respective one or more radio access nodes may be radio access nodes including the respective coverage hole identified within their previously determined respective coverage areas. The information may further include one or more load balancing parameters of the network.

Illustratively, the processor 501 may obtain the further coverage areas of the coverage map, such that, for each coverage hole of a respective radio access node of the plurality of radio access nodes, the respective further coverage area is representative of other respective one or more radio access nodes of the plurality of radio access nodes covering the respective coverage hole. Accordingly, the processor 501 may obtain each further coverage areas of the coverage map, such that the further coverage area may represent (or may be associated with) a smaller number of TX beams to be used to perform sensing operations compared to the number of TX beams used for the whole coverage in determination of the respective coverage area of the one of the radio access nodes and/or identification of the respective coverage hole.

In accordance with various aspects described herein, the coverage map may further include information representing TX beams associated with each radio access node to obtain the further coverage area. Illustratively, the processor 501 may determine TX beams at each configured direction of all configured directions for a radio access node of the plurality of radio access nodes. Illustratively, determined TX beams may include the blocked beams, the covering beams, and the one or more further beams as described herein. This may be referred to as "allocation or determination of further coverage areas" in this disclosure.

FIG. 9 shows an example illustration of a coverage map in accordance with various aspects described herein. Illustratively, the coverage map may represent a first further coverage area 901 representing the geographic region expected to be covered by the first radio access node 601 for sensing operations. A second further coverage area 902 represents the geographic region expected to be covered by the second radio access node 602 for sensing operations. A third further coverage area 903 represents the geographic region expected to be covered by the third radio access node 603 for sensing operations. An obstacle 710 may also be identified in accordance with the initial sensing operation.

In accordance with various aspects described herein, a coverage hole identified for a radio access node should be covered by other radio access nodes that have coverage within the area corresponding to the coverage hole. For example, the processor 501 may generate the coverage map and/or determine the one or more beams for the plurality of radio access nodes in accordance with designated rules (e.g. via using a rule-based method). Illustratively, the processor 501 may, for each identified coverage hole (blind spot) within the respective coverage area of a radio access node, determine a blocked beam for the radio access node towards the direction of the coverage hole, reducing the sensing range of the radio access node in that direction. Furthermore, the processor 501 may determine one or more covering beams (narrow or wide) for other radio access nodes to jointly cover the coverage hole from one or more different angles.

Area between two radio access nodes (e.g. when multiple radio access nodes reach the same area) can be allocated to the two radio access nodes equally (e.g. separated in mid-point range), or proportionate to the coverage capability of the radio access nodes. However, if there is a big object blocking one of the radio access nodes then the other radio access node has to cover the blocked area. For example, when at least two radio access nodes of the plurality of radio access nodes can cover the same area, the processor 501 may allocate the coverage responsibility as either by dividing the area corresponding to a coverage hole of a further radio access node at the mid-point range between the at least two radio access nodes or by allocating a proportionate based on the coverage capabilities of each of the at least two radio access nodes. However, if a coverage of one of the at least two radio access nodes is blocked, the other radio access node of the at least two radio access nodes may be assigned to cover the whole area corresponding to the coverage hole.

In some examples, the processor 501 may further consider designated use case requirements when allocating further coverage areas to radio access nodes. For example, certain areas may need higher sensing resolution or faster update rates, influencing the beam configurations assigned.

Specific network conditions may also influence how the processor 501 allocates further coverage areas to the radio access nodes. For example, multiple radio access nodes of the plurality of radio access nodes may be capable to cover a given area; then a less loaded radio access node that is selected to cover that area, to maintain load balancing between radio access nodes. For example, a radio access node may be less loaded due to the use of wider beams in some directions, another radio access node may be more loaded due to lots of narrow beams. For example, the processor 501 may allocate the further coverage areas based on network conditions like load balancing: The processor 501 may obtain information representing the network conditions from the radio access nodes. If multiple nodes can cover an area, the processor 501 may assign the less loaded radio access node (e.g. to maintain balance). Illustratively, a radio access node using wider beams in some directions may be less loaded than another radio access node using many narrow beams.

In some examples, the rule may include aiming to avoid overlap between further coverage areas to provide sensing operations within the geographic region efficiently, except for joint sensing and/or fusing scenarios, some of which may include the aspects described below. Correspondingly, the processor 501 may allocate the further coverage areas by preventing overlapping coverage areas between radio access nodes except for joint sensing/fusion scenarios.

One of the rules that may be directed to obtain the further coverage area for each radio access node as small (i.e. short in range) as possible, so that broader TX beams can be used, and sensing can be done with least number of beams. This may help to reduce sensing resources needed, as well as enabling faster update rate (since FoV can be scanned with lower number of beams) for use cases needing that. It is also noted that different areas may not be necessarily covered at the same time (beam sequence can be defined to avoid interference between the radio access nodes). The focus is on identifying the areas that can be sensed by at least one radio access node at a given time. For example, one of the radio access nodes may have narrower beams if the network does not have coverage from at least one other radio access node in that direction. Correspondingly, if a coverage hole lacks coverage from other nodes, a radio access node may need to use narrower beams in that direction. The processor 501 may determine one or more beams for one of the radio access nodes to avoid interference when radio access nodes scan their coverage areas at different times.

In some scenarios, where even the plurality of previously determined coverage areas have gaps, the processor 501 may determine to instruct multiple radio access nodes for joint sensing or/and fusing of sensing information to improve sensing coverage (e.g., at cell-edge, etc.). This may require appropriate design of beams from different radio access nodes to overlap in these areas to illuminate jointly to provide sensing data for joint processing.

Correspondingly, once the processor 501 determines the one or more beams associated with the plurality of radio access nodes, the processor 501 may instruct the plurality of radio access nodes to perform sensing operations using the one or more beams. Illustratively, the processor 501 may determine, for each radio access node, one or more TX beams as described herein, which may include the blocked beams, and/or the covering beams, and/or the one or more further beams. The processor 501 may encode information representing the one or more respective TX beams determined for each radio access node for a transmission to the respective radio access node and send the encoded information via the communication interface 503 to configure the respective radio access node to use the one or more respective TX beams.

In some examples, the processor 501 may determine only some of the beams associated with the radio access nodes, for example only the blocked beams and the covering beams. Correspondingly, the processor 501 may instruct the plurality of radio access nodes to use the determined one or more beams respectively. In some examples, the processor 501 may determine the respective beam sequences for each radio access node. Illustratively, a beam sequence for a radio access node may an ordered set of beam directions and configurations (e.g. beamwidth, transmit power) associated with the respective radio access node to perform both communication and sensing tasks. Accordingly, the processor 501 may determine the respective beam sequences considering the aspects described above involving temporal arrangements, e.g. to avoid interference, for joint sensing and/or fusing operations etc.

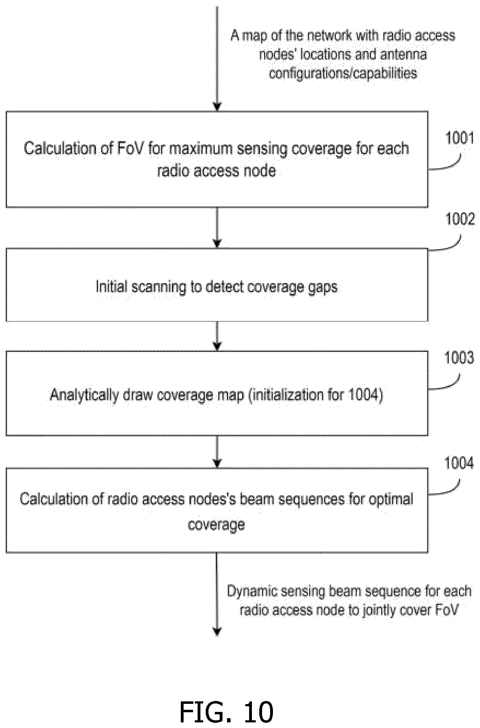

FIG. 10 shows an illustrative example of a procedure to determine the one or more beams for the plurality of radio access nodes configured for JCAS operations within a geographic region as described herein. Illustratively, a processor (e.g. the processor 501) of an apparatus (e.g. the apparatus 500) may perform this procedure, noting that aspects described in FIGs. 4-9 are applicable to perform the procedure.

In 1001, the processor 501 may obtain a map of the radio network with locations (e.g. coordinates) of radio access nodes from a memory (e.g. the memory 502). The processor 501 may further obtain antenna configurations and capabilities of each radio access node. Based on received locations, antenna configurations and capabilities, the processor 501 may calculate, for each radio access node, a respective FoV representing the maximum sensing coverage for that radio access node. As described herein, the processor 501 may use the radar equation to obtain each FoV based on a narrow beam of the respective radio access node.

In 1002, the processor 501 may further obtain sensing operation output information from each radio access node. Illustratively, each radio access node may perform an initial sensing to identify obstacles and/or sensing affecting phenomena during its operations. Each radio access node may use the respective narrow beam of the respective radio access node for the initial sensing. Correspondingly, each radio access node may generate its respective sensing operation output information and send it to the apparatus. The processor 501 may cause the memory to store received sensing operation output information from the radio access nodes.

In 1003, the processor 501 may analytically generate a coverage map, which may include an initial coverage map as illustratively described in FIG. 8. The processor 501 may generate the coverage map based on the map obtained in 1001, which may indicate the (ideal) FoV for maximum coverage for each radio access node, and the coverage holes identified from received sensing operation output information described in 1002, which may indicate macro detected targets/barriers, (i.e., with the information on the topology of the network and all the big objects). The processor 501 may generate the coverage map as an intended static sensing coverage map. Illustratively, the initial coverage map may represent an initial FoV for each radio access node to aim for (i.e. expected coverage). Through identification of coverage holes (i.e. by knowing what area need to be to covered) together with designated geographic region in which the radio access nodes provide JCAS services, the processor 501 may, in the next block, determine for each radio access node what beam to use in every direction suitable for providing the designated coverage.

It is further to be noted that the coverage map obtained in 1003 may be referred to as the initial coverage map, as the procedure may include further adjustments that may be later made to this initial coverage map as beams calculation progresses in 1004. For example, while the calculation of beams in 1004 is progressing to achieve coverage map defined in 1003, the beams that have been calculated so far can have some impact on remaining area to cover, and accordingly the map may be updated. The processor 501 may input this resulting map from 1003 into 1004 as the input to the beam calculation step in 1004. The processor 501 may implement various high-level strategies to generate the coverage map as illustrated in 1003 and to calculate the necessary beams to cover the coverage map as described herein.

In 1004, the processor 501 may perform a beam optimization. The aim of the beam optimization may include the calculation of a dynamic sensing beam sequence for each radio access node to jointly cover the FoV. Once the intended sensing coverage map is available in 1003, based on the coverage theory, the processor 501 may determine how the designated geographic region is to be covered. Particularly, knowing functionalities (e.g. capabilities) of each radio access unit and the smallest radar cross section (RCS) to be detected, the processor 501 may use the radar equation to determine beams in each direction, to cover the network optimally for real dynamic detection. The respective impact areas for the beams of radio access nodes may be based on the network topology, geometry, cell and sectors mapping, orientation of antenna panels of the base stations), and the supported beamforming strategies. Beams calculated in 1004 may enable sensing to be done as fast and as efficiently as possible, as the beams may need to be transmitted in sequence and periodically covering the area. Hence, there needs to be optimization of the coverage area with minimal number of beams and resources.

Once the beams are calculated as described herein, the radio access network may be ready for active/dynamic sensing. During the sensing phase, coverage of sensing beams as well as interference between beams from different base stations needs to be considered. When doing the scan with beams, two adjacent radio access nodes may need to avoid using beams with corresponding FoVs overlap at the same time to avoid/mitigate mutual interference.

In accordance with various aspects described herein, the processor 501 may generate the coverage map and determine the one or more beams by applying various strategies as indicated above. In some examples, the processor 501 may determine respective one or more beams of each respective radio access node of the plurality of radio access nodes sequentially for each respective radio access node. Accordingly, the processor 501 may determine a resulting coverage by subtracting the respective one or more beams of a previously iterated radio access node of the plurality of radio access nodes from the coverage map for a determination of one or more beams of a further radio access node of the plurality of radio access nodes.

For example, the processor 501 may determine initially a further coverage area of a first radio access node of the plurality of radio access nodes. At each following iteration, the processor may perform calculations for one radio access node of the plurality of radio access nodes. In some examples, the processor 501 may determine an order among the plurality of radio access nodes to perform calculations with iterations. In each following iteration, the processor 501 may determine the coverage area and respective one or more coverage holes of one radio access node. The processor 501 may generate a respective portion of the coverage map and may determine one or more respective beams for that one radio access node. In each following iteration, the processor 501 may also subtract the respective portion of the coverage map including the further coverage area determined for that one radio access node from the overall coverage map obtained at the previous iteration. Accordingly, the processor 501 may minimize the overlap between the resulting coverage maps of the radio access nodes by updating the remaining coverage area based on more precise coverage maps (based on actual beams designed) for radio access nodes.

In some examples, the processor 501 may conduct joint multi radio access node between the radio access nodes. For example, the processor 501 may determine the plurality of coverage areas as described herein to obtain the initial coverage map. Then for each radio access node, the processor 501 may calculate the respective one or more beams to cover the designated geographic region as described herein. With this implementation, the processor 501 may obtain more overlap compared to the iteration method described above as there can be some mismatch between coverage from determined respective beams and the initial coverage map.

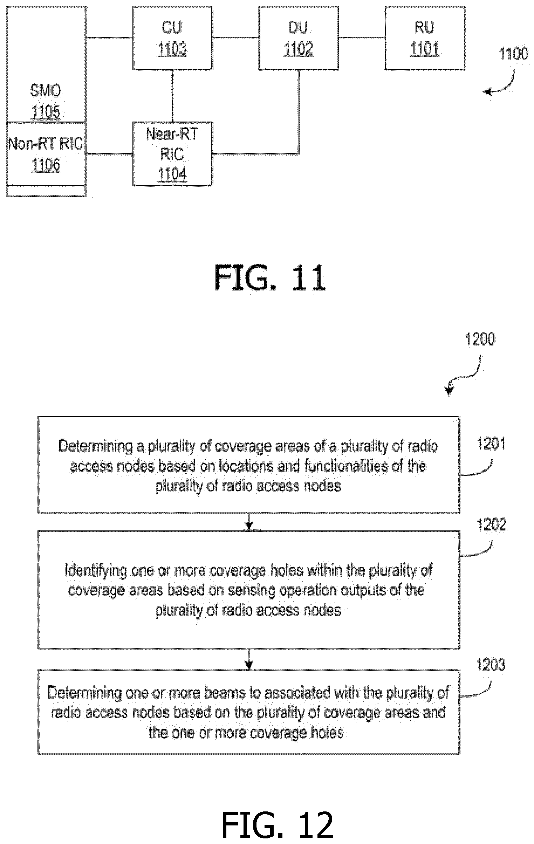

FIG. 11 shows an exemplary radio access network architecture in which the radio access network is disaggregated into multiple units. In LTE or 5G NR or other cellular technologies, network access nodes, such as a BS may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into RU, DU, and CU). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel.15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1100 provided herein includes a radio unit (RU) 1101, a DU 1102, a CU 1103, a near RT-RIC 1104, and a service management and orchestration framework (SMO) 1105 including a non-RT RIC 1106. The skilled person would recognize that the illustrated structure may represent a logical architecture, in which one or more of the entities of the mobile communication network may be implemented by the same physical entity, or a distributed physical entity (a plurality of devices operating collectively) may implement one of the entities of the mobile communication network provided herein. In accordance with various aspects provided herein, the radio access nodes may include RUs 1101 and a non-radio unit may include the apparatus.

In accordance with various aspects described herein, a centralized coordination and decision making may be necessary for the determination of coverage maps and the beam sequence of the radio access nodes. The aspects described herein may be particularly implemented within the O-RAN framework. Depending on the RAN architecture, DUs may be collocated and communicate with each other, or multiple DUs may connect to the O-RAN radio intelligence control (RIC) (e.g. RT-RICs 1104, and/or non-RT RIC 1106). Since the coverage decisions are generally static, the non-RT RIC 1106 may be particularly suitable for this purpose. Certain information must be provided from each of the DUs to a central location, where the coordination and decisions can happen. Illustratively, in the O-RAN architecture the apparatus 500 may be implemented in the non-RT RIC 1106, which may, based on the information on all the radio access nodes, e.g., location and/or antenna panel(s) orientation and/or beamforming capability (what kind of beams it intends to use or is capable of using for the scanning), etc. of each RU 1101, determine the coverage area of each RU 1101, and control the overall beamforming. particularly, for any point in the desired coverage area, the apparatus 500 may determine which RU 1101 will be covering, the beam pattern, etc. It is also noted that the interface to pass such information from the RUs 1101 (or DUs 1102/CUs 1103) to the non-RT RIC 1106 and from the non-RT RIC 1106 to the RUs 1101 (or DUs 1102/CUs 1103) already exists in the O-RAN architecture. In accordance with various aspects provided herein, the radio access nodes described herein may include RUs and a non-radio unit may include the apparatus 500. Illustratively, a BBU and/or a CU may include the apparatus 500. Illustratively, the apparatus 500 may be an apparatus of a DU 1102, a CU 1103, a near RT-RIC 1104, a SMO 1105, and/or a non-RT RIC 1106.

There are many approaches to provide the split among the multiple units. In this illustrative example, the CU 1103 (e.g. O-CU) may be mainly responsible for non-real time operations hosting the radio resource control (RRC), the PDCP protocol, and the service data adaptation protocol (SDAP). The DU (e.g. O-DU) 1102 may be mainly responsible for real-time operations hosting, for example, RLC layer functions, MAC layer functions, and Higher-PHY functions. RUs 1101 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1105 may provide functions to manage domains such as RAN management, Core management, Transport management, and the non-RT RIC 1106 may provide functions to support intelligent RAN optimization via policy-based guidance, AI/ML model management, etc. The near-RT RIC 1104 may provide functions for real time optimizations, including hosting one or more xApps that may collect real-time information (per UE or per Cell) and provide services, that may include AI/ML services as well.

The exemplary RAN 1100 is illustrated for the purpose of brevity. The skilled person would recognize the aspects provided herein and may also realize that the exemplary RAN 1100 may include further characterizations, such as the CU may also be -at least logically- distributed into two entities (e.g. CU-Control Plane, CU-User Plane), there may be various types of interfaces between different entities of the exemplary RAN 1100 (e.g. E2, F1, O1, X2, NG-u, etc.).

FIG. 12 shows an example of a method. The method 1200 may include: determining 1201 a plurality of coverage areas of a plurality of radio access nodes based on locations and functionalities of the plurality of radio access nodes; identifying 1202 one or more coverage holes within the plurality of coverage areas based on sensing operation outputs of the plurality of radio access nodes; determining 1203 one or more beams associated with the plurality of radio access nodes based on the plurality of coverage areas and the one or more coverage holes. A non-transitory computer readable medium may include instructions which, if executed by a processor, cause the processor to perform the method 1200.

The following examples pertain to further aspects of this disclosure.

In example 1, the subject matter includes an apparatus including a memory and a processor configured to: determine a plurality of coverage areas of a plurality of radio access nodes based on locations and functionalities (e.g. capabilities) of the plurality of radio access nodes; identify one or more coverage holes within the plurality of coverage areas based on sensing operation outputs of the plurality of radio access nodes; determine one or more beams associated with the plurality of radio access nodes based on the plurality of coverage areas and the one or more coverage holes.

In example 2, the subject matter of example 1, wherein each coverage hole of the one or more coverage holes represents a spatial region that is occluded from a sensing of one or more radio access nodes of the plurality of radio access nodes.

In example 3, the subject matter of example 1 or example 2, wherein the processor is further configured to determine, for a respective coverage hole for a respective radio access node of the plurality of radio access nodes, a beam associated with at least one other radio access node of the plurality of access nodes to provide a coverage for the respective coverage hole.

In example 4, the subject matter of example 3, wherein at least two further radio access nodes of the plurality of radio access nodes are determined for the respective coverage hole to provide a joint coverage for the respective coverage hole.

In example 5, the subject matter of any one of examples 1 to 4, wherein the processor is further configured to: calculate, for each radio access node of the plurality of radio access nodes, a respective coverage area based on a location and a first beam of the respective radio access node; determine a second beam associated with the respective radio access node, wherein the first beam is narrower than the second beam.

In example 6, the subject matter of example 5, wherein a respective sensing operation output of the sensing operation outputs is of a respective radio access node of the plurality of radio access nodes; wherein the respective sensing operation is performed with the first beam.

In example 7, the subject matter of any one of examples 1 to 6, wherein the processor is further configured to, for each coverage hole of respective one or more radio access nodes: determine a first beam of the respective one or more radio access nodes, wherein the first beam has a first beam width and a first direction towards the respective coverage hole; determine a second beam of the respective one or more radio access nodes, wherein the second beam has a second beam width and a second direction outside of the respective coverage hole; wherein the second beam is narrower than the first beam.

In example 8, the subject matter of any one of examples 1 to 7, wherein each coverage area of the plurality of coverage areas being representative of a field of view coverable by a respective radio access node of the plurality of radio access nodes.

In example 9, the subject matter of any one of examples 1 to 8, wherein the processor is further configured to generate a coverage map based on the plurality of coverage areas and the one or more coverage holes, wherein the coverage map is representative of a further plurality of coverage areas for the plurality of radio access nodes obtained by adjusting the plurality of coverage areas.

In example 10, the subject matter of example 9, wherein the coverage map includes information, for each coverage hole of a respective radio access node of the plurality of radio access nodes, representative of other respective one or more radio access nodes of the plurality of radio access nodes covering the respective coverage hole.

In example 11, the subject matter of example 9 or 10, wherein the further plurality of coverage areas is determined based on one or more load balancing parameters associated with the plurality of radio access nodes.

In example 12, the subject matter of any one of examples 9 to 11, wherein for each further coverage area of a respective radio access node of the further plurality of coverage areas represents a use of a smaller number of beams than a number beams used to obtain a respective coverage area of the respective radio access node of the plurality of coverage areas.

In example 13, the subject matter of any one of examples 9 to 12, wherein the processor is further configured to determine, for each coverage hole, the other respective one or more radio access nodes based on functionalities of the other respective one or more radio access nodes.

In example 14, the subject matter of any one of examples 9 to 13, wherein the processor is further configured to determine respective one or more beams of each respective radio access node of the plurality of radio access nodes sequentially for each respective radio access node; wherein a resulting coverage determined based on the respective one or more beams of a previously iterated radio access node of the plurality of radio access nodes is subtracted from the coverage map for a determination of one or more beams of a further radio access node of the plurality of radio access nodes.

In example 15, the subject matter of any one of examples 9 to 14, wherein the one or more beams are determined based on the coverage map.

In example 16, the subject matter of any one of examples 1 to 15, wherein the one or more beams are further determined based on at least one or a combination of a topology of a network including the plurality of radio access nodes, a geometry associated with the locations of the plurality of radio access nodes, a mapping of cells or sectors provided by the plurality of radio access nodes, orientations of antenna arrays of the plurality of radio access nodes, beamforming configurations supported by the plurality of radio access nodes, respective smallest radar cross sections detectable by the plurality of radio access nodes.

In example 17, a distributed radio access network system including: the plurality of radio access nodes; a non-radio unit including the apparatus of any one of examples 1 to 16;wherein the non-radio unit further includes a communication interface configured to communicate with the plurality of radio access nodes.

In example 18, the subject matter includes a non-transitory computer-readable medium including one or more instructions which, if executed by a processor, cause the processor to: determine a plurality of coverage areas of a plurality of radio access nodes based on locations and functionalities of the plurality of radio access nodes; identify one or more coverage holes within the plurality of coverage areas based on sensing operation outputs of the plurality of radio access nodes; determine one or more beams associated with the plurality of radio access nodes based on the plurality of coverage areas and the one or more coverage holes.

In example 19, the subject matter of example 18, wherein each coverage hole of the one or more coverage holes represents a spatial region that is occluded from a sensing of one or more radio access nodes of the plurality of radio access nodes.

In example 20, the subject matter of example 18 or example 19, wherein the one or more instructions further cause the processor to determine, for a respective coverage hole for a respective radio access node of the plurality of radio access nodes, a beam associated with at least one other radio access node of the plurality of access nodes to provide a coverage for the respective coverage hole.

In example 21, the subject matter of example 20, wherein at least two further radio access nodes of the plurality of radio access nodes are determined for the respective coverage hole to provide a joint coverage for the respective coverage hole.

In example 22, the subject matter of any one of examples 18 to 21, wherein the one or more instructions further cause the processor to: calculate, for each radio access node of the plurality of radio access nodes, a respective coverage area based on a location and a first beam of the respective radio access node; determine a second beam associated with the respective radio access node, wherein the first beam is narrower than the second beam.

In example 23, the subject matter of example 22, wherein a respective sensing operation output of the sensing operation outputs is of a respective radio access node of the plurality of radio access nodes; wherein the respective sensing operation is performed with the first beam.

In example 24, the subject matter of any one of examples 18 to 23, wherein the one or more instructions further cause the processor to, for each coverage hole of respective one or more radio access nodes: determine a first beam of the respective one or more radio access nodes, wherein the first beam has a first beam width and a first direction towards the respective coverage hole; determine a second beam of the respective one or more radio access nodes, wherein the second beam has a second beam width and a second direction outside of the respective coverage hole; wherein the second beam is narrower than the first beam.

In example 25, the subject matter of any one of examples 18 to 24, wherein each coverage area of the plurality of coverage areas being representative of a field of view coverable by a respective radio access node of the plurality of radio access nodes.

In example 26, the subject matter of any one of examples 18 to 25, wherein the one or more instructions further cause the processor to generate a coverage map based on the plurality of coverage areas and the one or more coverage holes, wherein the coverage map is representative of a further plurality of coverage areas for the plurality of radio access nodes obtained by adjusting the plurality of coverage areas.

In example 27, the subject matter of example 26, wherein the coverage map includes information, for each coverage hole of a respective radio access node of the plurality of radio access nodes, representative of other respective one or more radio access nodes of the plurality of radio access nodes covering the respective coverage hole.

In example 28, the subject matter of example 26 or 27, wherein the further plurality of coverage areas is determined based on one or more load balancing parameters associated with the plurality of radio access nodes.

In example 29, the subject matter of any one of examples 26 to 28, wherein for each further coverage area of a respective radio access node of the further plurality of coverage areas represents a use of a smaller number of beams than a number beams used to obtain a respective coverage area of the respective radio access node of the plurality of coverage areas.

In example 30, the subject matter of any one of examples 26 to 29, wherein the one or more instructions further cause the processor to determine, for each coverage hole, the other respective one or more radio access nodes based on functionalities of the other respective one or more radio access nodes.

In example 31, the subject matter of any one of examples 26 to 30, wherein the one or more instructions further cause the processor to determine respective one or more beams of each respective radio access node of the plurality of radio access nodes sequentially for each respective radio access node; wherein a resulting coverage determined by subtracting the respective one or more beams of a previously iterated radio access node of the plurality of radio access nodes from the coverage map for a determination of one or more beams of a further radio access node of the plurality of radio access nodes.

In example 32, the subject matter of any one of examples 26 to 31, wherein the one or more beams are determined based on the coverage map.

In example 33, the subject matter of any one of examples 18 to 32, wherein the one or more beams are further determined based on at least one or a combination of a topology of a network including the plurality of radio access nodes, a geometry associated with the locations of the plurality of radio access nodes, a mapping of cells or sectors provided by the plurality of radio access nodes, orientations of antenna arrays of the plurality of radio access nodes, beamforming configurations supported by the plurality of radio access nodes, respective smallest radar cross sections detectable by the plurality of radio access nodes.

In example 34, the subject matter includes a method including: determining a plurality of coverage areas of a plurality of radio access nodes based on locations and functionalities of the plurality of radio access nodes; identifying one or more coverage holes within the plurality of coverage areas based on sensing operation outputs of the plurality of radio access nodes; determining one or more beams associated with the plurality of radio access nodes based on the plurality of coverage areas and the one or more coverage holes.

In example 35, the subject matter of example 34, wherein each coverage hole of the one or more coverage holes represents a spatial region that is occluded from a sensing of one or more radio access nodes of the plurality of radio access nodes.

In example 36, the subject matter of example 34 or example 35, may further include determining, for a respective coverage hole for a respective radio access node of the plurality of radio access nodes, a beam associated with at least one other radio access node of the plurality of access nodes to provide a coverage for the respective coverage hole.

In example 37, the subject matter of example 36, wherein at least two further radio access nodes of the plurality of radio access nodes are determined for the respective coverage hole to provide a joint coverage for the respective coverage hole.

In example 38, the subject matter of any one of examples 34 to 37, may further include: calculating, for each radio access node of the plurality of radio access nodes, a respective coverage area based on a location and a first beam of the respective radio access node; determining a second beam associated with the respective radio access node, wherein the first beam is narrower than the second beam.

In example 39, the subject matter of example 38, wherein a respective sensing operation output of the sensing operation outputs is of a respective radio access node of the plurality of radio access nodes; wherein the respective sensing operation is performed with the first beam.

In example 40, the subject matter of any one of examples 34 to 39, may further include: for each coverage hole of respective one or more radio access nodes: determining a first beam of the respective one or more radio access nodes, wherein the first beam has a first beam width and a first direction towards the respective coverage hole; determining a second beam of the respective one or more radio access nodes, wherein the second beam has a second beam width and a second direction outside of the respective coverage hole; wherein the second beam is narrower than the first beam.

In example 41, the subject matter of any one of examples 34 to 40, wherein each coverage area of the plurality of coverage areas being representative of a field of view coverable by a respective radio access node of the plurality of radio access nodes.

In example 42, the subject matter of any one of examples 34 to 41, may further include generating a coverage map based on the plurality of coverage areas and the one or more coverage holes, wherein the coverage map is representative of a further plurality of coverage areas for the plurality of radio access nodes obtained by adjusting the plurality of coverage areas.

In example 43, the subject matter of example 42, wherein the coverage map includes information, for each coverage hole of a respective radio access node of the plurality of radio access nodes, representative of other respective one or more radio access nodes of the plurality of radio access nodes covering the respective coverage hole.

In example 44, the subject matter of example 42 or 43, wherein the further plurality of coverage areas is determined based on one or more load balancing parameters associated with the plurality of radio access nodes.

In example 45, the subject matter of any one of examples 42 to 44, wherein for each further coverage area of a respective radio access node of the further plurality of coverage areas represents a use of a smaller number of beams than a number beams used to obtain a respective coverage area of the respective radio access node of the plurality of coverage areas.

In example 46, the subject matter of any one of examples 42 to 45, may further include determining, for each coverage hole, the other respective one or more radio access nodes based on functionalities of the other respective one or more radio access nodes.

In example 47, the subject matter of any one of examples 42 to 46, may further include determining respective one or more beams of each respective radio access node of the plurality of radio access nodes sequentially for each respective radio access node; wherein a resulting coverage determined based on the respective one or more beams of a previously iterated radio access node of the plurality of radio access nodes is subtracted from the coverage map for a determination of one or more beams of a further radio access node of the plurality of radio access nodes.

In example 48, the subject matter of any one of examples 42 to 47, wherein the one or more beams are determined based on the coverage map.

In example 49, the subject matter of any one of examples 34 to 48, wherein the one or more beams are further determined based on at least one or a combination of a topology of a network including the plurality of radio access nodes, a geometry associated with the locations of the plurality of radio access nodes, a mapping of cells or sectors provided by the plurality of radio access nodes, orientations of antenna arrays of the plurality of radio access nodes, beamforming configurations supported by the plurality of radio access nodes, respective smallest radar cross sections detectable by the plurality of radio access nodes.

In example 50, a non-transitory computer-readable medium including one or more instructions which, if executed by a processor, cause the processor to: calculate a plurality of coverage areas for a plurality of radio access nodes based on locations and functionalities of the plurality of radio access nodes, wherein each coverage area of the plurality of coverage areas represents a respective geographic area coverable by a respective radio access node for communication and/or sensing operations; determine one or more coverage holes associated with the plurality of coverage areas based on information representing sensing operation outputs of the plurality of radio access nodes; determine one or more transmit beams associated with the plurality of radio access nodes.

**In** example 51, the non-transitory computer readable medium of example 51, wherein the one or more instructions further cause the processor to perform any one of the examples and/or any one of the aspects described herein.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The terminology in accordance with open-RAN (O-RAN) specifications is to be considered for Radio Units (RUs), Distributed Units (DUs) and Centralized Units (CUs). Inherently, a base station is considered to be disaggregated into such units in accordance with layers of a corresponding protocol stack into these logical nodes, which all of them can be implemented by the same device or multiple devices in which each device may be deployed with one of these units.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electromagnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. An apparatus comprising a memory and a processor configured to:

    determine a plurality of coverage areas of a plurality of radio access nodes based on locations and functionalities of the plurality of radio access nodes;
    identify one or more coverage holes within the plurality of coverage areas based on sensing operation outputs of the plurality of radio access nodes; and
    determine one or more beams associated with the plurality of radio access nodes based on the plurality of coverage areas and the one or more coverage holes.

2. The apparatus of claim 1,

wherein each coverage hole of the one or more coverage holes represents a spatial region that is occluded from a sensing of one or more radio access nodes of the plurality of radio access nodes.

3. The apparatus of any one of claims 1 or 2,

   wherein the processor is further configured to determine, for a respective coverage hole for a respective radio access node of the plurality of radio access nodes, a beam associated with at least one other radio access node of the plurality of access nodes to provide a coverage for the respective coverage hole;
   preferably wherein at least two further radio access nodes of the plurality of radio access nodes are determined for the respective coverage hole to provide a joint coverage for the respective coverage hole.

4. The apparatus of any one of claims 1 to 3,
   wherein the processor is further configured to:

   calculate, for each radio access node of the plurality of radio access nodes, a respective coverage area based on a location and a first beam of the respective radio access node; and
   determine a second beam associated with the respective radio access node, wherein the first beam is narrower than the second beam;
   preferably wherein a respective sensing operation output of the sensing operation outputs is of a respective radio access node of the plurality of radio access nodes; and wherein the respective sensing operation is performed with the first beam.

5. The apparatus of any one of claims 1 to 4,
   wherein the processor is further configured to, for each coverage hole of respective one or more radio access nodes:

   determine a first beam of the respective one or more radio access nodes, wherein the first beam has a first beam width and a first direction towards the respective coverage hole; and
   determine a second beam of the respective one or more radio access nodes, wherein the second beam has a second beam width and a second direction outside of the respective coverage hole;
   wherein the second beam is narrower than the first beam.

6. The apparatus of any one of claims 1 to 5,
   wherein each coverage area of the plurality of coverage areas being representative of a field of view coverable by a respective radio access node of the plurality of radio access nodes.

7. The apparatus of any one of claims 1 to 6,

   wherein the processor is further configured to generate a coverage map based on the plurality of coverage areas and the one or more coverage holes, wherein the coverage map is representative of a further plurality of coverage areas for the plurality of radio access nodes obtained by adjusting the plurality of coverage areas;
   preferably wherein the coverage map comprises information, for each coverage hole of a respective radio access node of the plurality of radio access nodes, representative of other respective one or more radio access nodes of the plurality of radio access nodes covering the respective coverage hole.

8. The apparatus of claim 7,
   wherein the further plurality of coverage areas is determined based on one or more load balancing parameters associated with the plurality of radio access nodes.

9. The apparatus of any one of claims 7 or 8,
   wherein for each further coverage area of a respective radio access node of the further plurality of coverage areas represents a use of a smaller number of beams than a number beams used to obtain a respective coverage area of the respective radio access node of the plurality of coverage areas.

10. The apparatus of any one of claims 7 to 9,
    wherein the processor is further configured to determine, for each coverage hole, the other respective one or more radio access nodes based on functionalities of the other respective one or more radio access nodes.

11. The apparatus of any one of claims 7 to 10,

wherein the processor is further configured to determine respective one or more beams of each respective radio access node of the plurality of radio access nodes sequentially for each respective radio access node; and wherein a resulting coverage determined based on the respective one or more beams of a previously iterated radio access node of the plurality of radio access nodes is subtracted from the coverage map for a determination of one or more beams of a further radio access node of the plurality of radio access nodes.

12. The apparatus of any one of claims 7 to 11,
wherein the one or more beams are determined based on the coverage map.

13. The apparatus of any one of claims 1 to 12,
wherein the one or more beams are further determined based on at least one or a combination of a topology of a network including the plurality of radio access nodes, a geometry associated with the locations of the plurality of radio access nodes, a mapping of cells or sectors provided by the plurality of radio access nodes, orientations of antenna arrays of the plurality of radio access nodes, beamforming configurations supported by the plurality of radio access nodes, respective smallest radar cross sections detectable by the plurality of radio access nodes.

14. A non-transitory computer-readable medium comprising one or more instructions which, if executed by a processor, cause the processor to:

determine a plurality of coverage areas of a plurality of radio access nodes based on locations and functionalities of the plurality of radio access nodes;
identify one or more coverage holes within the plurality of coverage areas based on sensing operation outputs of the plurality of radio access nodes; and
determine one or more beams associated with the plurality of radio access nodes based on the plurality of coverage areas and the one or more coverage holes;
preferably wherein each coverage hole of the one or more coverage holes represents a spatial region that is occluded from a sensing of one or more radio access nodes of the plurality of radio access nodes.

15. A distributed radio access network system comprising:

a plurality of radio access nodes;
an apparatus of any one of claims 1 to 13.

100

110

102

120

104

# FIG. 1

200

202

206

204

208

210

212

TX

RX

DSP

Protocol processor

Application processor

Memory

214

# FIG. 2

FIG. 3A

FIG. 3B

FIG. 4

FIG. 5

FIG. 6

FIG. 7

FIG. 8

FIG. 9

A map of the network with radio access
nodes' locations and antenna
configurations/capabilities

Calculation of FoV for maximum sensing coverage for each
radio access node — 1001

Initial scanning to detect coverage gaps — 1002

Analytically draw coverage map (initialization for 1004) — 1003

Calculation of radio access nodes's beam sequences for optimal
coverage — 1004

Dynamic sensing beam sequence for each
radio access node to jointly cover FoV

# FIG. 10

```
┌──────────┐      ┌──────────┐   ┌──────────┐   ┌──────────┐
│          │      │   CU     │   │   DU     │   │   RU     │
│          │──────│  1103    │───│  1102    │───│  1101    │
│          │      └────┬─────┘   └──────────┘   └──────────┘        1100
│  SMO     │           │                                        ↙
│  1105    │           │
├──────────┤      ┌────┴─────┐
│Non-RT RIC│      │ Near-RT  │
│  1106    │──────│   RIC    │
│          │      │  1104    │
└──────────┘      └──────────┘
```

# FIG. 11

1200

↙

┌─────────────────────────────────────────────────────┐
│ Determining a plurality of coverage areas of a       │   1201
│ plurality of radio access nodes based on locations   │
│ and functionalities of the plurality of radio        │
│ access nodes                                         │
└─────────────────────────────────────────────────────┘
                          ↓
┌─────────────────────────────────────────────────────┐
│ Identifying one or more coverage holes within the    │   1202
│ plurality of coverage areas based on sensing         │
│ operation outputs of the plurality of radio access   │
│ nodes                                                │
└─────────────────────────────────────────────────────┘
                          ↓
┌─────────────────────────────────────────────────────┐
│ Determining one or more beams to associated with the │   1203
│ plurality of radio access nodes based on the         │
│ plurality of coverage areas and the one or more      │
│ coverage holes                                       │
└─────────────────────────────────────────────────────┘

# FIG. 12

EUROPEAN SEARCH REPORT

Europäisches
Patentamt
European
Patent Office
Office européen
des brevets

**Application Number**

EP 25 17 3192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/031210 A1 (ERICSSON TELEFON AB L M [SE]) 10 February 2022 (2022-02-10) <br> * paragraph [0082] - paragraph [0089] * <br> * paragraph [0102] - paragraph [0105] * <br> * paragraph [0349] * <br> * figures 1-7, 55 * <br> ----- | 1-15 | INV. <br> H04B7/06 <br> H04B7/08 <br> H04W16/28 |

**TECHNICAL FIELDS SEARCHED (IPC)**

H04B
H04W

The present search report has been drawn up for all claims

| Place of search | Date of completion of the search | Examiner |
|---|---|---|
| Munich | 17 September 2025 | Spinnler, Florian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 3192

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2025

| Patent document cited in search report | Publication date | Patent family member(s) | | Publication date |
|---|---|---|---|---|
| WO 2022031210 A1 | 10-02-2022 | BR 112023002043 | A2 | 04-04-2023 |
| | | CO 2023001825 | A2 | 17-03-2023 |
| | | EP 4193637 | A1 | 14-06-2023 |
| | | JP 7675170 | B2 | 12-05-2025 |
| | | JP 2023536912 | A | 30-08-2023 |
| | | US 2024259837 | A1 | 01-08-2024 |
| | | WO 2022031210 | A1 | 10-02-2022 |

EPO FORM P0459

For more details about this annex : see Official Journal of the European Patent Office, No. 12/82